# EUROPEAN PATENT SPECIFICATION

(11) **EP 0 535 089 B1**
(45) Date of publication and mention of the grant of the patent: **03.05.1995**
(21) Application number: 91911712.7
(22) Date of filing: 19.06.1991
(51) Int. Cl.: G01D 9/00, G09F 13/02, G09F 13/04, B41J 3/60

(54) **METHOD FOR PRODUCING AN IMAGE ON A SUBSTRATE HAVING THE SAME SPECTRAL CONTENT WITH FRONT AND BACK ILLUMINATION**
VERFAHREN ZUR BILDERZEUGUNG AUF EINEM SUBSTRAT MIT GLEICHEM SPEKTRALEN INHALT BEI FRONT- UND RÜCKBELEUCHTUNG
PROCEDE DE PRODUCTION D'UNE IMAGE SUR UN SUBSTRAT AYANT LA MEME TENEUR SPECTRALE LORSQU'ELLE EST ECLAIREE DE FRONT OU EN CONTRE-JOUR

(30) Priority: 20.06.1990 US 540892
(43) Date of publication of application: 07.04.1993
(73) Proprietor: METROMEDIA COMPANY, East Rutherford, New Jersey 07073-2137 (US)
(72) Inventor: BLAKE, Dale, Wooster, OH 44691 (US); REDDING, Donald, Pasadena, CA 91103 (US)
(74) Representative: Archer, Philip Bruce
(86) International application number: PCT/US91/04363
(87) International publication number: WO 91/19955

(56) References cited:
- EP-A- 0 041 390
- EP-A- 0 452 566
- FR-A- 2 177 302
- US-A- 3 163 554

## Description

### BACKGROUND OF THE INVENTION

The present invention relates generally to ink jet printing systems for large scale graphic generation and deals more particularly with a method for producing an image (for example a large scale color graphic) that presents substantially the same spectral content to a viewer when the image is illuminated with front or back lighting.

Large scale color graphic systems for producing images on sheet material or other substrates for use in outdoor advertising, road side billboards and signs and displays in railway or airport terminals, shopping malls and other such public areas are disclosed in U.S. Patent 4,547,786 entitled "INK JET PRINTING SYSTEM" and U.S. Patent 4,811,0̸38 entitled "INK JET PRINTING SYSTEM AND DRUM THEREFORE" both of which are assigned to the same assignee as the present invention.

The large scale color graphic systems, such as those referenced above, produce images using four color process pigment inks on an opaque white substrate. The images are generally optimized for outdoor viewing in natural light by day and may be illuminated from the front by artificial lighting means for viewing at night. Although there is a difference in the spectral content of the viewed image under natural and artificial illumination, the lighting is sufficiently similar to cause the image produced with the four color process pigmented inks to appear substantially the same under either natural or artificial illumination. Additionally, the contrast of the image, that is, the ratio of the light reflected from the lightest area on the image to the light reflected from the darkest area on the image, remains substantially constant regardless of the illumination type.

In order to achieve a more dramatic nighttime effect, images are produced which are intended for backlight viewing, that is, the light source is located such that the image is located between the light source and a viewer. Generally, these images are produced using four color process pigmented inks deposited on a translucent white substrate. The substrate carrying the image is suspended on a frame or other such apparatus and is illuminated with a light source located at the rear, that is, on the opposite side of the substrate carrying the image.

A general problem associated with images produced on a substrate intended for backlighting is that the image must generally be produced with more highly pigmented inks or thicker ink films than those images produced on substrates intended for lighting by front illumination. When such images are illuminated by backlight at night, the image is of generally good quality however, during daytime viewing, the same image generally appears very dark and the colors may not be true, that is, not having the same spectral content when viewed by a viewer under the different lighting conditions.

There is disclosed in US-A-3 163 554 a film for use in visual presentations which has clarity when viewed by reflected light and which also possesses clarity when viewed by transmitted light. When the film is viewed by transmitted light, the entire composite impression is observed by the viewer. When the film is observed by reflected light a different impression is obtained, for example just the black portions of the picture, and not the color elements thereof.

There is disclosed in FR-A-2 177 302 a process for the dry transfer of drawings on to the reverse side of a plane base such that the transferred drawings or motifs are located in a desired position with respect to drawings or motifs formed on the "right" side of the plane base. The motifs on opposite sides of the plane base may have different colors or opposite colors to achieve a "reversible" effect. The process provides an image on opposite sides of a textile material in one step.

There is disclosed in EP-A-0 452 566 a method for enhancing the density of a first dye image to make it more visible or viewable or more easily detected. This is done by transferring a second dye image on to the opposite side of a transparent film carrier so as to co-operate with a first dye image thereon. This document is post-published but claims an earlier priority and thus falls within the terms of Article 54(3) EPC.

It is therefore a general aim of the present invention to provide a method whereby the problems associated with images produced on a substrate and which have different spectral content when illuminated by backlighting and front lighting, are reduced or overcome.

According to the invention there is provided a method as defined in claim 1 of the accompanying claims.

In an embodiment of the present invention, a method is provided for producing an image with four color process ink on a substrate surface whereby the image exhibits substantially the same spectral content when illuminated by a light source located in front of the surface carrying the image and when illuminated by a light source located behind the surface carrying the image is presented. One or more of differently pigmented inks are applied or printed onto a surface of a substrate, such as a vinyl flexible sheet which is translucent, to create the desired colored graphic. In one embodiment of the invention, a second image is created and applied on the opposite surface of the substrate such that the ink film forming the second image is in registry with the ink film forming the first image. When the image is viewed under frontal lighting conditions, light from a light source passes through the ink film forming the first image to the substrate and is substantially completely reflected by the substrate surface back through the ink film and toward a viewer. The viewer observes an image illuminated by light that has passed through the ink film an equivalent of two film thicknesses. When the image is illuminated with a backlight, the light from the light source passes through the ink film of the second image, on through the substrate, and through the ink film forming the first image toward a viewer. Again, the viewer observes an image illuminated with light that has passed through two film thicknesses. Accordingly, both front and rear lighting illuminate an image that is observed by a viewer wherein the color content of the light illuminating the image is absorbed and passed by the equivalent of two ink thicknesses with either lighting type and therefore light reaching the viewer has substantially the same spectral content under either lighting type.

In another embodiment of the invention, the second image is created on a surface of a second substrate and both substrates are then laminated such that both images are in registry and alignment with one another. Frontal light passes through the first ink film and is reflected by the surface of the first substrate back toward a viewer such that the viewer observes an image that is illuminated with light which is passed through two ink film thickness. When the image is viewed with backlighting, light passes through the second substrate, which is transparent, through the second ink film and through the first substrate, which is preferably translucent, and through the first ink film in a direction toward a viewer. The viewer observes an image wherein light passes through two ink film thicknesses and has the same spectral content when illuminated by front lighting or backlighting.

### BRIEF DESCRIPTION OF THE DRAWINGS

Other features and advantages of the present invention will become readily apparent from the following written description and drawings wherein:
Fig. 1 is a vector diagram illustrating cyan, magenta and yellow color components to explain four color process principles.
Fig. 2 shows an ink film on a substrate with front lighting in the prior art;
Fig. 3 shows an ink film on a substrate with backlighting in the prior art;
Fig. 4 illustrates one embodiment of the method of the present invention wherein a substrate has an ink film on both front and rear surfaces of the substrate;
Fig. 5 illustrates another embodiment of the method of the present invention wherein each of two substrates carries an ink film forming the image and are laminated such that the images are in registry;
Fig. 6 illustrates another embodiment of the method of the present invention wherein a first ink film image is carried on the substrate surface and is overpainted by a layer of translucent white ink upon which a second ink film image is carried in registry with the first image.

### DETAILED DESCRIPTION OF PREFERRED EMBODIMENTS

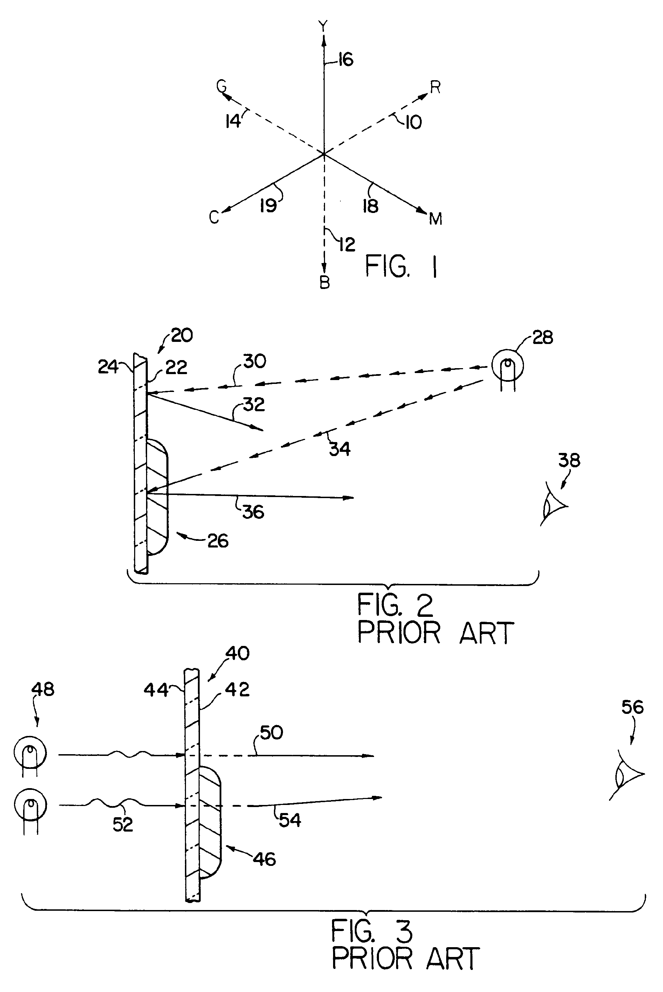

Prior to describing the method of the present invention in detail, it is beneficial to have a working knowledge of the four color process system for generating color images of the type with which are of concern to the present invention. Turning first to Fig. 1, a vector diagram is illustrated therein wherein red, blue and green vectors, designated 10̸, 12 and 14, respectively and vectors 16, 18 and 19 represent the colors yellow, magenta and cyan, respectively. As known, the red, green and blue vectors represent primary colors and if combined in roughly equal proportions, that is, each vector is substantially the same magnitude, the resultant combination is representative of white light. It can also be seen that if one or more of the red, green, blue vectors have unequal magnitudes with respect to one another, the resulting combination will produce a colored light. The resultant color of any combination of the red, green and blue vectors is determined by the addition of the respective vectors. For example, if the blue vector 12 is removed from white light, only the red and green vectors 10̸,14 respectively remain and the vector sum of the red and green vectors produce the color yellow shown by the vector 16. If the vector 14, representative of green light, is reduced in magnitude, the resultant vector will shift clockwise toward the red vector and the resultant color may be seen as orange. Similarly, if the red vector 10̸ is removed from white light the remaining blue and green vectors 12,14 respectively will produce the color cyan shown by the vector 19. Likewise, if the color green shown as the vector 14 is removed from white light, the remaining red and blue vectors add to produce the color magenta shown by the vector 18.

The foregoing provides the fundamentals for understanding a four color process using transparent substractive pigmented inks to produce a colored graphic image. For purposes of explanation it is assumed that the various pigmented inks used are ideal. A perfect process yellow ink passes red and green light unattenuated and totally absorbs blue light. Likewise, an ideal perfect process magenta ink is transparent to red and blue light but absorbs green light and an ideal process cyan ink is transparent to blue and green light but absorbs red light. Colored graphic images generated with pigmented inks such as the graphic generation disclosed in the above-identified patents, result in multi-layer ink films and produce accumulative effects. For example, in a two-layer ink film comprised of yellow and magenta process inks, both blue and green light are absorbed and the resultant color is red. In the case of a three-layer ink film of yellow, magenta and cyan, all of the red, green and blue light is absorbed and the resultant color produced is black. For further details of four color process systems and techniques, the reader may refer to numerous textbooks and literature available in the art.

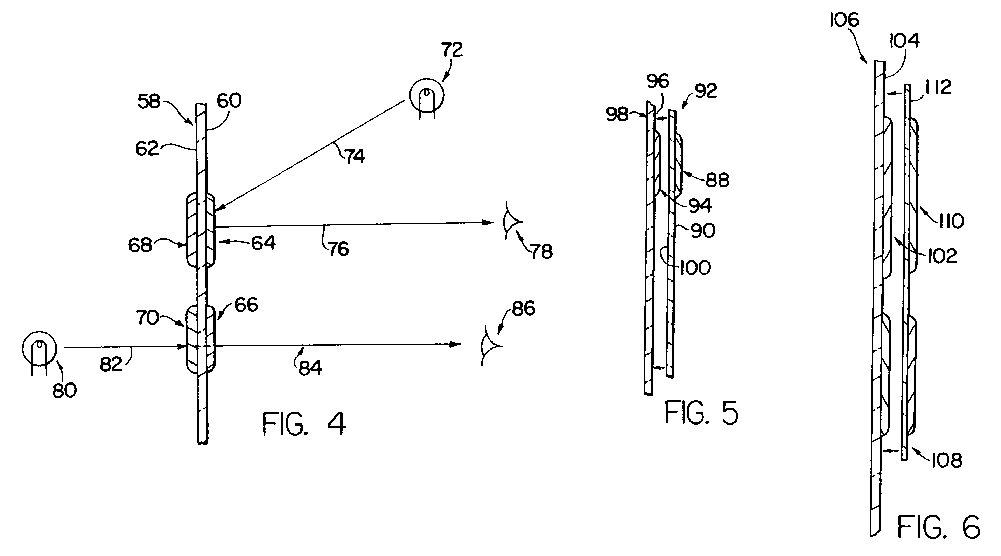

Turning to Figs. 2 and 3, Fig. 2 shows an ink film on a substrate with front lighting in the prior art and Fig. 3 shows an ink film on a substrate with backlighting in the prior art. In Fig. 2, an opaque white substrate generally designated 20̸ has a front surface 22 and rear surface 24 and upon which an ink film generally designated 26 is applied to the surface 22. The ink film 26, for purposes of explanation, is considered to be a yellow pigmented ink. The pigmentation of the yellow ink film 26 is such that 50̸% of the blue light is removed or absorbed in a single passage of light through the film. A light source generally designated 28 is assumed to emit white light, which recalling from above, comprises the vector addition of equal magnitude red, green and blue vectors and which white light is shown as the ray 30̸. The white light ray 30̸ impinges on the surface 22 of the substrate 20̸ and is reflected as white light represented by the reflected ray 32. White light emitted from the light source 28 and designated by the ray 34 passes through the yellow ink film 26 and impinges on the surface 22 of the substrate 20̸ and is reflected back through the film 26 as reflected ray 36. The yellow ink film absorbs 50̸% of the blue component comprising the white light ray 34 in one passage through the film toward the substrate surface 22 and passes 10̸0̸% of the red and green components of the white light. The impinging resultant light is reflected from the substrate surface 22 back through the yellow ink film 26 as reflective ray 36 which comprises 10̸0̸% of the red and green components and 50̸% of the blue component reflected from substrate surface 22, that is, the blue component is again reduced by 1/2. An observer indicated generally at 38, views the color of the reflected ray 36 produced by 10̸0̸% of the red and green components of the original white light and 25% of the blue component of the original white light. The ink film will appear to the observer 38 as a modestly dense yellow color.

Turning to Fig. 3, an example of a backlit image in the prior art is illustrated wherein the substrate generally designated 40̸ is preferably a translucent white substrate and includes a front surface 42 and rear surface 44. As in the case of the front light example illustrated in Fig. 2, the ink film is assumed to be a yellow pigmented ink and is generally designated 46 and is applied to the surface 42 of the substrate 40̸. A white light source generally designated 48 is located behind the substrate 40̸, that is, on the same side as the rear surface 44 of the substrate 40̸. For purposes of comparison to the front light example shown in Fig. 2, the intensity of the white light emitted from the light source 48 is made so that the light represented by the ray 50̸ passing through the substrate 40̸ is equal in intensity to the white light ray 32 of Figure 2. This condition is imposed only for purposes of comparison to the example illustrated in Fig. 2 however, it is not necessary since the light passing through the ink film 46 and the substrate 40̸ is judged only with reference to the light passing through the substrate alone. The light emitted from the light source 48 and designated by the ray 52 passes through the substrate 40̸ and the ink film 46 and emerges as the ray 54. Since the light passes through the ink film 46 only once, the blue component of the white light has a 50̸% absorption and the light reaching an observer generally designated 56, is comprised of 10̸0̸% of the red and green components and 50̸% of the blue component so that the yellow ink film appears to the observer 56 as a pale yellow color.

In order to make the ink film 46 of Fig. 3 look similar to the color of the ink film 26 in Figure 2, the thickness of the ink film in Figure 3 is doubled as is currently done in the prior art. Since the blue light loss is 50̸% for each thickness, the resultant would be light made of 10̸0̸% of the red and green components and 25% of the blue component thereby appearing as the same color to the respective observers in Figures 2 and 3 when viewed in front and back light, respectively. However, if the substrate and ink film image of Figure 3 is viewed with a front light source as in the case of Figure 2, the light passing through the double thickness ink film in reality makes four passages through the ink film and the resultant reflected light seen by the observer is comprised of 10̸0̸% of the red and green components and 6.25% of the blue component. Thus it can be seen that the spectral content of the light reaching a viewer is not the same for both type lighting for each of the images produced in the prior art.

It will be appreciated by those skilled in the art that the above analysis may be extended to ink films of any color or in combinations of any such ink films. The analysis is however, complicated in that the available pigmented inks are not perfect and ideal as assumed in the analysis in Figures 2 and 3. Non-linearities in apparent color contamination with film thickness may cause the color of an ink film to be different whether viewed in front or rear light and accordingly, such images produced with conventional known methods do not appear the same to an observer when the image is illuminated with both front and back light even when produced according to the prior art.

Now considering the invention in further detail, reference is made to Figure 4 wherein a substrate, generally designated 58, includes a front surface 60̸ and rear surface 62. An image comprised of ink films generally designated as 64 and 66 respectively are applied side-by-side to one surface 60̸ of the substrate 58. A substantially identical image comprising ink films 68 and 70̸ respectively are applied to the rear surface 62 of the substrate 58 and in registry with the image applied to the front surface 60̸. That is, the ink film 68 is in registry with the ink film 64 and the ink film 70̸ is in registry with the ink film 66. It will be seen that the respective images are mirror images of one another.

A light source generally designated 72 provides front illumination and transmits a ray of white light generally designated 74 toward the substrate 58. The ray 74 passes through the ink film 64 and is reflected by the surface 60̸ of the substrate 58 back through the ink film 64 as ray 76 toward an observer generally designated 78. The observer sees an image having a spectral content that is the result of light passing through the equivalent of two ink film thicknesses. When the image is illuminated with a backlight generally designated 80̸, white light emitted as the ray 82 passes through the ink film 70̸, through the substrate 58 and through the ink film 66 and emerges as the ray 84 in a direction toward an observer generally designated 86. The observer 86 sees a image having a spectral content produced by white light passing through two ink film thicknesses. It can be seen that the observer 78 and observer 86 view an image having substantially the same spectral content whether the image is illuminated by the front light source 72 or the rear light source 80̸.

In practice, it is preferable that the translucent substrate 58 have an approximate 15% transmission factor resulting in approximately 85% reflectance of light impinging on the substrate surface. It is also found that since imperfect pigmented inks are used and applied to a substrate which is only semi-opaque, and further that the spectral content of the front and back light sources may differ, the optimum reproduction between front and back light conditions may require that the density and color balance of the image applied to the rear surface 62 of the substrate 58 be somewhat different than the density and color balance of the image applied to the front surface 60̸ of the substrate 58. For example, it may not be necessary to use black pigmented ink on one of the front surface 60̸ or rear surface 62 which is due in part to the fact that black pigmented ink is nearly opaque and therefore there is no requirement to apply the black pigmented ink to both the front and rear surfaces since all light is substantially absorbed by one thickness.

Turning now to Fig. 5, another embodiment of the method of the present invention is illustrated therein wherein the image to be viewed is created by depositing ink film generally designated 88 on the surface 90̸ of a substrate generally designated 92. A second image is created by depositing an ink film generally designated 94 on the front surface 96 of a second substrate generally designated 98. The images carried by the substrates 92 and 98 respectively are located in registry and the substrate 92 and 98 are laminated such that the front surface 96 of the substrate 98 is facing the rear surface 10̸0̸ of the substrate 92. Preferably, the substrate 92 has a 15% transmission factor and the substrate 98 is preferably transparent. It will be seen that when the substrates are laminated with the ink films and accordingly the images in registry, light originating from a front light source passes through the ink film 88 and is reflected from the surface 90̸ so that the light passes through two ink film thicknesses. Likewise, light emitted from a backlight passes through the substrate 98, ink film 94, substrate 92 and ink film 88 so that light again passes through two ink film thicknesses. Accordingly, it is seen from Fig. 5 that the method of the present invention provides an image viewed by an observer wherein light reaching the observer has substantially the same spectral content regardless of the image being illuminated by a front light or a back light source.

Turning now to Fig. 6, another embodiment of the method of the present invention is illustrated wherein the desired image is created by a first ink film generally designated 10̸2 which is applied to the front surface 10̸4 of a substrate generally designated 10̸6. The layer of ink film 10̸2 and substrate surface is overpainted with a translucent white paint layer generally designated 10̸8. A second ink film generally designated 110̸ is applied to the surface 112 of the translucent white ink or paint layer 10̸8 and in registry with the first ink film layer 10̸2. The substrate 10̸6 preferably is transparent having a 10̸0̸% transmission factor while the layer of translucent white paint or transparent semi-reflective material 10̸8 has a 15% transmission factor. In this embodiment it can be seen from Fig. 6 that light emitted from a light source placed in front of the image passes through the ink film layer 110̸ and is reflected by the surface 112 of the white ink layer 10̸8 back through the film 110̸ thereby passing through the ink film twice which is the equivalent of two ink thicknesses. Likewise, it can be seen that a light source placed in back of the substrate 10̸6 emits light which passes through the substrate 10̸6 and through the film 10̸2, through the white ink layer 10̸8 and through the ink film 110̸. Accordingly, a viewer observing the image receives light which has substantially the same spectral content whether the image is illuminated by front light or a back light since the emitted light passes through two thicknesses of ink film in both instances. One benefit of this embodiment is that only one substrate is required thus reducing costs of a final colored graphic that is to be viewed under both front and back lighting conditions.

Again as described above, compensation may be made to correct for imperfect pigmented inks and light sources having different spectral content (such as sunlight and fluorescent lamps) to adjust the density and color balance achieved with front and back lighting.

A method for producing an image with a four color process ink on a substrate surface wherein the image exhibits substantially the same spectral content when illuminated by a light source located in front of the surface carrying the image as when illuminated by a light source located behind the surface carrying the image has been disclosed above in several preferred embodiments. It will be understood that additional changes and embodiments may be made by those skilled in the art without departing from the scope of the present invention as defined in the appended claims. Therefore, the invention has been described by way of illustration rather than limitation.

## Claims

1. A method for producing an image on a substrate (58), preferably for use in relation to large scale color graphic systems, comprising applying first (64, 66) and second (68, 70) ink films respectively to first (60) and second (62) surfaces with at least one substrate (58) located therebetween, said first and second ink films being applied to said surfaces in registry;
characterised in that
said ink films constitute substantially identical images; and said substrate being a translucent substrate;
whereby, in use, the spectral contents of the images produced by back-lighting and front-lighting of said ink films on said surfaces are substantially identical.

2. A method according to claim 1, characterised by the step of applying said ink films with somewhat differing density and color balance to said surfaces to compensate for imperfect ink pigmentation.

3. A method according to claim 1 or claim 2, characterised by applying said ink films with somewhat differing density and colour balance to said surfaces to compensate for said front and/or back lighting with light sources having different spectral content.

4. A method according to any one of the preceding claims, characterised by said first (64) and second (68) ink films being applied to opposite surfaces (60, 62) of the same substrate in mirror image form.

5. A method according to any one of claims 1 to 3, characterised by first (88) and second (94) ink films applied to surfaces of first (92) and second (96) substrates.

6. A method according to any one of the preceding claims, characterised by said translucent substrate having a transmission factor of approximately 15%.

7. A method according to claim 5, characterised by said first substrate being translucent and said second substrate being transparent.

8. An ink film image on a substrate (58), preferably for use in relation to large scale color graphic systems, comprising first (64, 66) and second (68, 70) ink films applied respectively to first (60) and second (62) surfaces with at least one substrate (58) located therebetween, said first and second ink films being in registry on said surfaces;
characterised in that
said ink films constitute substantially identical images; and
said substrate being a translucent substrate whereby, in use, the spectral content of the images produced by back-lighting and front-lighting of said ink films on said surfaces are substantially the same.

9. An ink film image on a substrate (58) according to claim 8, characterised by said ink films having somewhat differing density and color balance to compensate for imperfect ink pigmentation.

10. An ink film image on a substrate (58) according to claim 8 or claim 9, characterised by said ink films having somewhat differing density and color balance to compensate for front and/or back-lighting with light sources having different spectral content.

11. An ink film image on a substrate (58) according to any one of claims 8 to 10, characterised by said first (64) and second (68) ink films being on opposite surfaces (60, 62) of the same substrate and in mirror image form.

12. An ink film image on a substrate (58) according to any one of claims 8 to 10, characterised by said first (64) and second (66) ink films being on surfaces of first (92) and second (96) substrates.

13. An ink film image on a substrate (58), characterised by said translucent substrate having a transmission factor of approximately 15%.

14. An ink film image on a substrate (58), characterised by said first substrate being translucent and said second substrate being transparent.

15. A large scale color graphic sign or display, characterised by the use of a ink film image on a substrate (58) according to any one of claims 8-14.

16. A large scale colour graphic sign or display according to claim 15, characterised by back-lighting apparatus (80) disposed to illuminate said ink films.

17. A large scale colour graphic sign or display according to claim 15, characterised by front-lighting apparatus (72) disposed to illuminate said ink films.

## Patentansprüche

1. Verfahren zum Erzeugen eines Bildes auf einem Substrat (58), vorzugsweise zur Verwendung in Verbindung mit großen Farbgraphiksystemen, umfassend das Aufbringen einer ersten Farbschicht (64, 66) und einer zweiten Farbschicht (68, 70) auf einer ersten Fläche (60) bzw. auf einer zweiten Fläche (62), wobei mindestens ein Substrat (58) zwischen den Flächen angeordnet ist und wobei die erste und die zweite Farbschicht deckungsgleich auf die Flächen aufgetragen werden,
dadurch **gekennzeichnet,**
daß die Farbschichten im wesentlichen identische Bilder bilden und das Substrat ein durchscheinendes Substrat ist, wobei im Gebrauch die spektralen Zusammensetzungen der durch Beleuchtung der Farbschichten auf den Flächen von hinten und von vorne erzeugten Bilder im wesentlichen übereinstimmen.

2. Verfahren nach Anspruch 1, **gekennzeichnet** durch einen Schritt, bei welchem die Farbschichten mit etwas unterschiedlicher Dichte und Farbbalance auf die Flächen aufgebracht werden, um abweichende Farbpigmentation zu kompensieren.

3. Verfahren nach Anspruch 1 oder 2, **gekennzeichnet** durch Aufbringen der Farbschichten mit etwas unterschiedlicher Dichte und Farbbalance auf die Flächen, um das Beleuchten von vorne und/oder von hinten mit Lichtquellen zu kompensieren, die unterschiedliche Spektralzusammensetzungen haben.

4. Verfahren nach einem der vorhergehenden Ansprüche, dadurch **gekennzeichnet,** daß die erste Farbschicht (64) und die zweite Farbschicht (68) auf einander gegenüberliegenden Flächen (60, 62) desselben Substrats spiegelbildlich aufgebracht sind.

5. Verfahren nach einem der Ansprüche 1 bis 3, dadurch **gekennzeichnet,** daß die erste Farbschicht (88) und die zweite Farbschicht (94) auf Flächen eines ersten Substrats (92) und eines zweiten Substrats (96) aufgebracht sind.

6. Verfahren nach einem der vorhergehenden Ansprüche, dadurch **gekennzeichnet,** daß das durchscheinende Substrat einen Transmissionsfaktor von annähernd 15 % hat.

7. Verfahren nach Anspruch 5, dadurch **gekennzeichnet,** daß das erste Substrat durchscheinend und das zweite Substrat transparent ist.

8. Farbschichtbild auf einem Substrat (58), vorzugsweise zur Verwendung in Verbindung mit großen Farbgraphiksystemen, umfassend eine erste Farbschicht (64, 66) und eine zweite Farbschicht (68, 70), die auf einer ersten Fläche (60) bzw. einer zweiten Fläche (62) aufgetragen sind, wobei mindestens ein Substrat (58) zwischen den Flächen angeordnet ist und wobei die erste und die zweite Farbschicht deckungsgleich auf den Flächen vorgesehen sind,
dadurch **gekennzeichnet,**
daß die Farbschichten im wesentlichen identische Bilder bilden, und daß das Substrat ein durchscheinendes Substrat ist, wobei im Gebrauch die spektralen Zusammensetzungen der durch Beleuchtung der Farbschichten auf den Flächen von hinten und von vorne erzeugten Bilder im wesentlichen gleich sind.

9. Farbschichtbild auf einem Substrat (58) nach Anspruch 8, dadurch **gekennzeichnet,** daß die Farbschichten eine etwas unterschiedliche Dichte und Farbbalance haben, um eine abweichende Farbpigmentation zu kompensieren.

10. Farbschichtbild auf einem Substrat (58) nach Anspruch 8 oder 9, dadurch **gekennzeichnet,** daß die Farbschichten etwas unterschiedliche Dichte und Farbbalance haben, um das Beleuchten von vorne und/oder von hinten mit Lichtquellen zu kompensieren, die unterschiedliche spektrale Zusammensetzungen haben.

11. Farbschichtbild auf einem Substrat (58) nach einem der Ansprüche 8 bis 10, dadurch **gekennzeichnet,** daß die erste Farbschicht (64) und die zweite Farbschicht (68) auf einander gegenüberliegenden Flächen (60, 62) desselben Substrats in Spiegelbildform vorgesehen sind.

12. Farbschichtbild auf einem Substrat (58) nach einem der Ansprüche 8 bis 10, dadurch **gekennzeichnet,** daß die erste Farbschicht (64) und die zweite Farbschicht (66) auf Flächen eines ersten Substrats (92) und eines zweiten Substrats (96) vorgesehen sind.

13. Farbschichtbild auf einem Substrat (58), dadurch **gekennzeichnet,** daß das durchscheinende Substrat einen Transmissionsfaktor von annähernd 15 % hat.

14. Farbschichtbild auf einem Substrat (58), dadurch **gekennzeichnet,** daß das erste Substrat durchscheinend und das zweite Substrat transparent ist.

15. Großfarbgraphikschild oder Großfarbgraphikanzeige, **gekennzeichnet** durch die Verwendung eines Farbschichtbildes auf einem Substrat (58) nach einem der Ansprüche 8 bis 14.

16. Großfarbgraphikschild oder Großfarbgraphikanzeige nach Anspruch 15, **gekennzeichnet** durch eine Rückseitenbeleuchtungseinrichtung (80), die zum Beleuchten der Farbschichten angeordnet ist.

17. Großfarbgraphikschild oder Großfarbgraphikanzeige nach Anspruch 15, **gekennzeichnet** durch eine Frontseitenbeleuchtungseinrichtung (72), die zum Beleuchten der Farbschichten angeordnet ist.

## Revendications

1. Procédé de production d'une image sur un substrat (58), avantageusement pour une utilisation en association avec des systèmes graphiques de couleur à grande échelle, comprenant l'application de première (64, 66) et deuxième (68, 70) pellicules d'encre respectivement sur des première (60) et deuxième (62) surfaces entre lesquelles se trouve au moins un substrat (58), lesdites première et deuxième pellicules d'encre étant appliquées sur lesdites surfaces en correspondance ;
caractérisé en ce que
lesdites pellicules d'encre forment des images sensiblement identiques ; et ledit substrat étant un substrat translucide ;
moyennant quoi, en fonctionnement, les contenus spectraux des images produites en éclairant par derrière et en éclairant par devant lesdites pellicules d'encre sur lesdites surfaces sont sensiblement identiques.

2. Procédé selon la revendication 1, caractérisé par l'étape consistant à appliquer lesdites pellicules d'encre avec une densité et un équilibre des couleurs légèrement différents sur lesdites surfaces pour compenser une pigmentation d'encre imparfaite.

3. Procédé selon la revendication 1 ou la revendication 2, caractérisé par l'application desdites pellicules d'encre avec une densité et un équilibre des couleurs légèrement différents sur lesdites surfaces pour compenser ledit éclairage avant et/ou arrière par des sources lumineuses présentant un contenu spectral différent.

4. Procédé selon l'une quelconque des revendications précédentes, caractérisé en ce que lesdites première (64) et deuxième (68) pellicules d'encre sont appliquées sur des surfaces opposées (60, 62) du même substrat sous forme d'images dans une symétrie plane.

5. Procédé selon l'une quelconque des revendications 1 à 3, caractérisé en ce que les première (88) et deuxième (94) pellicules d'encre sont appliquées sur des surfaces des premier (92) et deuxième (96) substrats.

6. Procédé selon l'une quelconque des revendications précédentes, caractérisé en ce que ledit substrat translucide présente un facteur de transmission de 15 %.

7. Procédé selon la revendication 5, caractérisé en ce que ledit premier substrat est translucide et ledit deuxième substrat est transparent.

8. Image de pellicule d'encre sur un substrat (58), avantageusement pour une utilisation en association avec des systèmes graphiques de couleur à grande échelle, comprenant des première (64, 66) et deuxième (68, 70) pellicules d'encre appliquées respectivement sur des première (60) et deuxième (62) surfaces entre lesquelles se trouve au moins un substrat (58), lesdites première et deuxième pellicules d'encre coïncidant sur lesdites surfaces ;
caractérisée en ce que
lesdites pellicules d'encre forment des images sensiblement identiques ; et
ledit substrat est un substrat translucide moyennant quoi, en fonctionnement, le contenu spectral des images produites par éclairage arrière et avant desdites pellicules d'encre sur lesdites surfaces est sensiblement le même.

9. Image de pellicule d'encre sur un substrat (58) selon la revendication 8, caractérisée en ce que lesdites pellicules d'encre présentent une densité et un équilibre des couleurs légèrement différents pour compenser une pigmentation d'encre imparfaite.

10. Image de pellicule d'encre sur un substrat (58) selon la revendication 8 ou la revendication 9, caractérisée en ce que lesdites pellicules d'encre présentent une densité et un équilibre des couleurs légèrement différents pour compenser un éclairage avant et/ou arrière par des sources lumineuses présentant un contenu spectral différent.

11. Image de pellicule d'encre sur un substrat (58) selon l'une quelconque des revendications 8 à 10, caractérisée en ce que lesdites première (64) et deuxième (58) pellicules d'encre sont sur des surfaces (60, 62) se faisant face sur le même substrat et sous forme d'image dans une symétrie plane.

12. Image de pellicule d'encre sur un substrat (58) selon l'une quelconque des revendications 8 à 10, caractérisée en ce que lesdites première (64) et deuxième (58) pellicules d'encre sont sur des surfaces des premier (92) et deuxième (96) substrats.

13. Image de pellicule d'encre sur un substrat (58), caractérisée en ce que ledit substrat translucide présente un facteur de transmission d'environ 15%.

14. Image de pellicule d'encre sur un substrat (58), caractérisée en ce que ledit premier substrat est translucide et ledit deuxième substrat est transparent.

15. Panneau ou affichage graphique de couleur à grande échelle, caractérisé par l'utilisation d'une image de pellicule d'encre sur un substrat (58) selon l'une quelconque des revendications 8 à 14.

16. Panneau ou affichage graphique de couleur à grande échelle selon la revendication 15, caractérisé par un dispositif (80) d'éclairage arrière disposé pour éclairer lesdites pellicules d'encre.

17. Panneau ou affichage graphique de couleur à grande échelle caractérisé par un dispositif (72) d'éclairage avant disposé pour éclairer lesdites pellicules d'encre.
